# EUROPÄISCHE PATENTSCHRIFT

(11) **EP 2 487 372 B1**
(45) Veröffentlichungstag und Bekanntmachung des Hinweises auf die Patenterteilung: **02.12.2015**
(21) Anmeldenummer: 11192413.0
(22) Anmeldetag: 07.12.2011
(51) Int. Cl.: F16B 5/01, A47B 96/06

(54) **Befestigungsanordnung und Verfahren zur Herstellung einer solchen**
Fastening element and method for producing the same
Agencement de fixation et son procédé de fabrication

(30) Priorität: 09.02.2011 DE 102011010813; 29.03.2011 DE 102011015495
(43) Veröffentlichungstag der Anmeldung: 15.08.2012
(73) Patentinhaber: Fritz Egger GmbH & Co. OG, 6380 St. Johann in Tirol (AT)
(72) Erfinder: Frank, Andreas, 32584 Löhne (DE); Stolzlechner, Georg, 6380 St. Johann in Tirol (AT)
(74) Vertreter: Cohausz & Florack

(56) Entgegenhaltungen:
- DE-B3-102005 057 525
- DE-U1-202008 002 540
- DE-U1-202009 001 094
- GB-A- 899 579
- US-A- 4 793 267
- US-A- 6 164 610

## Beschreibung

Die Erfindung betrifft eine Befestigungsanordnung zur Montage einer Leichtbauplatte, insbesondere eines Wandboards, an einer Wand, z.B. einer Wand eines Möbels (Seitenwand, Rückwand, Boden, Deckel) oder einer Gebäudewand, mit einer sich von einer hinteren Schmalseite zu einer vorderen Schmalseite in einer Erstreckungsrichtung erstreckenden Leichtbauplatte, die eine obere Deckplatte, eine von der oberen Deckplatte vertikal beabstandete untere Deckplatte und eine dazwischen angeordnete leichte Mittellage aufweist, mit mindestens einem Halteteil, das einen Stützabschnitt zum Tragen der Leichtbauplatte aufweist, der eine der oberen Deckplatte im montierten Zustand zugewandte Oberseite und eine der unteren Deckplatte im montierten Zustand zugewandte Unterseite aufweist, mit mindestens einem in der Wand verankerbaren Befestigungsmittel und mit mindestens einer Aufnahme für das mindestens eine Halteteil, die sich in der Erstreckungsrichtung ausgehend von der hinteren Schmalseite zwischen den Deckplatten ins Innere der Leichtbauplatte erstreckt, wobei im montierten Zustand der Stützabschnitt des mindestens einen Halteteils im Inneren der Leichtbauplatte in der Aufnahme angeordnet ist und die obere Deckplatte berührt.

Ferner betrifft die Erfindung ein Verfahren zur Herstellung einer Befestigungsanordnung enthaltend eine Wand, z.B. eine Wand eines Möbels (Seitenwand, Rückwand, Boden, Deckel) oder eine Gebäudewand, eine sich von einer hinteren Schmalseite zu einer vorderen Schmalseite in einer Erstreckungsrichtung erstreckenden Leichtbauplatte, die eine obere Deckplatte, eine von der oberen Deckplatte vertikal beabstandete untere Deckplatte und eine dazwischen angeordnete leichte Mittellage aufweist, mindestens ein Halteteil, das einen Stützabschnitt zum Tragen der Leichtbauplatte aufweist, der eine der oberen Deckplatte im montierten Zustand zugewandte Oberseite und eine der unteren Deckplatte im montierten Zustand zugewandte Unterseite aufweist, mindestens ein in der Wand verankerbares Befestigungsmittel und mindestens eine Aufnahme für das mindestens ein Halteteil, das sich in der Erstreckungsrichtung ausgehend von der hinteren Schmalseite zwischen den Deckplatten ins Innere der Leichtbauplatte erstreckt.

Schließlich betrifft die Erfindung ein entsprechendes Möbel.

Im Möbelbau sind Regalbretter zur direkten Befestigung an einer Gebäudewand bekannt. Diese Regalbretter werden auch Wandboards oder Wandregale genannt. Da solche Wandboards ein relativ hohes Gewicht haben, wenn diese aus Vollmaterial, beispielsweise Vollspan, hergestellt sind, werden diese zunehmend aus Leichtbauplatten hergestellt, also einer Platte, die einen Aufbau mit einer oberen Deckplatte, einer unteren Deckplatte und einer dazwischen angeordneten leichten Mittellage aufweist. Mit einer leichten Mittellage ist eine Lage aus einem Material gemeint, die ein geringeres Gewicht, bzw. eine geringere Dichte als das Deckplattenmaterial hat und beispielsweise aus mineralischer Dämmwolle, einer Wabenstruktur, insbesondere aus Kartonwaben, oder aus ähnlichen Materialien besteht.

Ein Wandboard der zuvor beschriebenen Art, das üblicherweise zumindest an den sichtbaren Seiten mit einer Beschichtung versehen ist, kann auf verschiedene Weise an der Wandoberfläche montiert werden.

So ist es bekannt, ein Wandboard mittels einer darunter angeordneten Konsole an der Wand zu montieren. Nachteilig bei dieser Art einer Befestigungsanordnung ist allerdings, dass die Beschlagteile, das heißt die Bauteile der Konsole, sichtbar sind, was oftmals unerwünscht ist. Daneben müssen die Beschlagteile optisch ansprechend gestaltet sein und sind daher relativ teuer.

Es sind daher im Stand der Technik für den Fall, dass als Wandboard eine Leichtbauplatte montiert werden soll, Befestigungsanordnungen mit verdeckten Stützbeschlägen bekannt. So ist beispielsweise ein U-förmiger Bügel bekannt, der mit seiner Grundseite an der Wandoberfläche beispielsweise mittels Verschraubung befestigt wird und dessen beide Arme ins Innere der Leichtbauplatte eingreifen, derart, dass nur die obere Deckplatte der Leichtbauplatte unmittelbar auf den beiden Armen des Stützbeschlags aufliegt. Dies führt allerdings zu einer relativ schlechten Krafteinleitung und in der Folge zu einer relativ geringen Belastbarkeit. Darüber hinaus können unerwünschte Verformungen und vorzeitige Schäden an dem Wandboard durch diese Art der Befestigung hervorgerufen werden.

Ferner ist aus dem Stand der Technik auch eine Befestigungsanordnung unter Verwendung einer Leichtbauplatte bekannt, bei der Spezialdübel in eine aufwendig einzubringende Ausnehmung an einer der Leichtbauplattenschmalseiten eingeklebt werden. Die Leichtbauplatte wird mit den Dübeln auf an der Wand montierte bolzenförmige Stützbeschläge aufgeschoben. Durch das Verkleben erfolgt auch eine Verbindung der Dübel mit der unteren Deckplatte und teilweise mit der Mittellage, wodurch die Krafteinleitung beim montierten Wandboard verbessert wird. Neben den vergleichsweise hohen Kosten des Dübels ist die Herstellung der Ausnehmung und die Klebung allerdings relativ aufwendig und teuer.

Um die Wandmontage zu vereinfachen, ist aus dem Stand der Technik auch eine Befestigungsanordnung, wie sie eingangs beschrieben wurde, bekannt, die eine Leichtbauplatte, einen Stützbeschlag und ein Halteteil umfasst. Bei dem Stützbeschlag handelt es sich um ein im Querschnitt T-förmiges Bauteil bestehend aus einer ein Wandfixierungsmittel bildenden Platte und einem ein Stützmittel bildenden Schaft, der einstückig mit der Platte ausgebildet ist und sich senkrecht zu der Platte erstreckt, wobei die Platte zwei Bohrungen aufweist, über die der Stützbeschlag mit der Wand verschraubt werden kann. Ferner weist die Befestigungsanordnung ein davon unabhängiges ein Halteteil bildendes Bauteil auf, welches mit einer stirnseitigen Aufnahme für das schaftförmige Stützmittel des Stützbeschlags versehen ist. Das Halteteil ist in einer dafür vorgesehenen Aufnahme in der Leichtbauplatte angeordnet und fest mit der Leichtbauplatte verklebt.

Das Wandboard der zuvor beschriebenen Befestigungsanordnung, welches aus der Leichtbauplatte und dem bereits werkseitig in ihrem Inneren vormontierten und fest verklebten Halteteil besteht, ist zwar von dem Endverbraucher auf einfache Weise an der Wand zu montieren, ist aber auf Grund der vielen Einzelteile, die für die Wandmontage zwingend notwendig sind, relativ komplex aufgebaut und damit teuer in der Herstellung. Entsprechend gestaltet sich auch die Herstellung relativ aufwändig.

Eine gattungsgemäße Befestigungsanordnung ist aus der DE 20 2008 002 540 U bekannt.

Es ist daher die Aufgabe der vorliegenden Erfindung, eine Befestigungsanordnung zur Montage einer Leichtbauplatte an einer Wand bereit zu stellen, mit der die Wandmontage vereinfacht wird. Die Aufgabe ist es auch, ein entsprechendes Herstellungsverfahren anzugeben.

Die zuvor hergeleitete und aufgezeigte Aufgabe wird gemäß einer ersten Lehre der vorliegenden Erfindung gelöst durch eine Befestigungsanordnung mit den Merkmalen des Anspruchs 1.

Mit anderen Worten kann mit der erfindungsgemäßen Befestigungsanordnung die Leichtbauplatte bzw. das Wandboard allein durch Befestigen des Halteteils an der Wand und Aufschieben der Leichtbauplatte auf das Halteteil montiert werden, und zwar unter Verzicht auf einen separaten und zusätzlich zu montierenden Stützbeschlag, wie er im Stand der Technik notwendig ist. Zur Montage an der Wand sind außer dem jeweiligen Halteteil und dem in der Wand verankerbaren Befestigungsmittel bevorzugt keine weiteren Bauteile wie ein Stützbeschlag, wie er beim Stand der Technik notwendig ist, vorgesehen. Damit verläuft also auch kein weiteres Bauteil, außer dem Halteteil und dem Befestigungsmittel, im montierten Zustand zwischen den Deckplatten.

Im Unterschied zur vorliegenden Erfindung ist es im Stand der Technik immer notwendig, zunächst einen Stützbeschlag mittels in der Wand verankerbaren Befestigungsmitteln an der Wand zu fixieren und zusätzlich ein Halteteil in die Leichtbauplatte einzusetzen, bevor dann die Gesamtheit aus Leichtbauplatte und Halteteil auf den Stützbeschlag aufgeschoben werden kann. Im Gegensatz zur Erfindung müssen also immer zwei separate Teile, das heißt das Halteteil in der Leichtbauplatte und der Stützbeschlag an der Wand, montiert werden, bevor die Leichtbauplatte bzw. das Wandboard an der Wand montiert werden kann. Erfindungsgemäß entfällt ein solcher Stützbeschlag, da das Halteteil direkt mit der Wand verbunden wird. Entsprechend entfällt erfindungsgemäß auch der separate Schritt der Montage eines Stützbeschlags an der Wand.

Unter einem in der Wand verankerbaren Befestigungsmittel wird erfindungsgemäß ein Bauteil verstanden, welches einen Abschnitt aufweist, der in eine entsprechende Aufnahme, beispielsweise Bohrung, in der Wand eingeführt werden kann. Insbesondere ist ein solches Befestigungsmittel bolzenförmig ausgebildet, weist also einen Bolzenkopf und Bolzenschaft auf. Der Bolzenschaft kann auch ein Außengewinde aufweisen. Im einfachsten Fall ist ein solches Befestigungsmittel im Sinne der Erfindung eine Schraube, ein Nagel oder dergleichen. Dabei ist im Unterschied zu dem aus dem Stand der Technik bekannten Stützbeschlag bei dem Bauteil, welches erfindungsgemäß als Befestigungsmittel verstanden wird, der Schaft derjenige Abschnitt, der in der Wand angeordnet wird. In diesem Zusammenhang sei ergänzend angemerkt, dass ein in der Wand verankerbares Befestigungsmittel, wie es erfindungsgemäß verstanden wird, im Stand der Technik dazu verwendet wird, den Stützbeschlag mit der Wand zu verbinden. Wie zuvor erläutert, ist es durch das erfindungsgemäß vorgesehene Halteteil, welches einen Stützabschnitt aufweist, der eine oder beide Deckplatten von innen berührt, nicht mehr notwendig, dass die Leichtbauplatte bzw. das Wandboard einzelne, nicht miteinander verbundene Riegel, insbesondere in Erstreckungsrichtung verlaufende Querriegel, oder einen Rahmen aus mehreren miteinander verbundenen Riegeln aufweist. Mit einem Rahmen bzw. Riegeln sind Holzelemente aus Vollholz oder verpressten Holzpartikeln gemeint, die im Stand der Technik zwischen den Deckplatten einer Leichtbauplatte dazu dienen, auf die Deckplatten ausgeübten Druck aufzunehmen, um dadurch die empfindliche Mittellage zu schützen. Diesen Schutz übernimmt bei der erfindungsgemäß verwendeten Leichtbauplatte, bei der die Mittellage beispielsweise wie aus dem Stand der Technik bekannt ausgebildet ist und insbesondere eine Kartonwabenstruktur aufweist, das mindestens eine Halteteil. Es sind zwei Halteteile oder mehr vorgesehen, die neben der Befestigungsfunktion zur Befestigung der Leichtbauplatte bzw. des Wandboards an der Wand auch eine Stützfunktion übernehmen.

Indem außerdem mindestens zwei voneinander beabstandete Befestigungsmittelaufnahmen im Wandfixierungsabschnitt vorgesehen sind, können zu beiden Seiten des Stützabschnitts Befestigungsmittel in den Wandfixierungsabschnitt eingeführt und mit der Wand verbunden werden, wodurch die Leichtbauplatte besonders einfach verdrehsicher an der Wand fixierbar ist. Indem dabei zu beiden Seiten des Stützabschnitts je ein Teil des Wandfixierungsabschnitts angeordnet ist, wobei jeder dieser Teile des Wandfixierungsabschnitts mit mindestens einer der Befestigungsmittelaufnahmen versehen ist, ist der Wandfixierungsabschnitt auf einfache Weise zugänglich, um die Befestigungsmittel in die Befestigungsmittelaufnahme einzuführen und anschließend, beispielsweise durch Verschrauben, in der Wand zu verankern.

Wie zuvor angedeutet kann bei der erfindungsgemäßen Leichtbauplatte die leichte Mittellage aus einer Kartonwabenstruktur bestehen. Grundsätzlich sind auch andere Materialien denkbar, die eine geringere Dichte bzw. ein geringeres Gewicht als die Deckplatten haben. Die Deckplatten bestehen bevorzugt aus einem Holzwerkstoff, beispielsweise einer Span-, Faser- oder OSB-(oriented strand board-) Platte.

Gemäß einer Ausgestaltung der erfindungsgemäßen Befestigungsanordnung ist die mindestens eine Befestigungsmittelaufnahme im Wandfixierungsabschnitt derart geformt, dass das in der Wand verankerbare Befestigungsmittel nur ausgehend von der Seite der Befestigungsmittelaufnahme, die der Leichtbauplatte im montierten Zustand zugewandt ist, in die Befestigungsmittelaufnahme einführbar und dann in der Wand verankerbar ist. Die Konstruktion ist damit erfindungsgemäß also so gewählt, dass erst das Halteteil an der Wand montiert werden muss, bevor dann die Leichtbauplatte mit dem Halteteil verbunden werden kann. Dabei ist die mindestens eine Befestigungsmittelaufnahme nutförmig oder kanalförmig, beispielsweise als Bohrung, ausgebildet, und erstreckt sich von der der Leichtbauplatte im montierten Zustand zugewandten Seite des Wandfixierungsabschnitts vollständig durch den Wandfixierungsabschnitt bis zu der im montierten Zustand der Wand zugewandten bzw. der Leichtbauplatte abgewandten Seite des Wandfixierungsabschnitts. "Kanalförmig" meint im Sinne der Erfindung, dass die Befestigungsmittelaufnahme über ihren vollständigen Umfang von Material umgeben ist. Insbesondere hat die Befestigungsmittelaufnahme die Form eines Langlochs, und zwar bevorzugt eines (im Querschnitt) vertikalen Langlochs, das eine vertikale Feinjustierung des Halteteils relativ zu einer Bohrung in der Wand zulässt.

Gemäß noch einer Ausgestaltung der erfindungsgemäßen Befestigungsanordnung ist vorgesehen, dass der Wandfixierungsabschnitt mindestens einen Führungszapfen aufweist, wobei sich der mindestens eine Führungszapfen, insbesondere entgegen der Erstreckungsrichtung, über die hintere Schmalseite der Leichtbauplatte hinaus erstreckt. Vorzugsweise weist der Wandfixierungsabschnitt mindestens zwei voneinander beabstandete Führungszapfen auf, wobei insbesondere jeder der zu beiden Seiten des Stützabschnitts angeordneten Teile des Wandfixierungsabschnitts mit mindestens einem Führungszapfen versehen ist. Ein oder mehrere solcher Führungszapfen haben den Vorteil, dass die Verbindung der Leichtbauplatte mit der Wand besonders präzise und dauerhaft erfolgen kann. Dies gilt insbesondere dann, wenn es sich bei der Wand um ein plattenförmiges Möbelteil, beispielsweise die Seite eines Möbels, handelt und die damit zu verbindende Leichtbauplatte beispielsweise einen Boden oder dergleichen des Möbels bildet. In diesem Fall wird das Halteteil als Korpusverbinder (Verbinder zweier Möbelteile) verwendet, der die Montage insbesondere an den Seiten verbessert. Mindestens einer der Führungszapfen, insbesondere alle Führungszapfen, kann bzw. können einstückig mit dem Wandfixierungsabschnitt ausgeführt sein und beispielsweise an den Wandfixierungsabschnitt angeformt sein. Alternativ kann als Führungszapfen auch ein separates bolzenförmiges Bauteil, beispielsweise ein Dübel, verwendet werden, das bzw. der jeweils in eine korrespondierende Vertiefung im Wandfixierungsabschnitt eingesetzt ist.

Gemäß einer weiteren Ausgestaltung der erfindungsgemäßen Befestigungsanordnung hat der Wandfixierungsabschnitt dieselbe Höhe wie der Stützabschnitt. Auf diese Weise übernimmt neben dem Stützabschnitt auch der Wandfixierungsabschnitt eine Stützfunktion. So wird die Fläche, über die die Kräfte und Momente von den Deckplatten aufgenommen werden können, maximiert.

Im Sinne der Erfindung ist mit der Höhe die Dimension gemeint, die senkrecht zur Erstreckungsrichtung und senkrecht zur Längsmittelebene der Leichtbauplatte bzw. der Deckplatten verläuft. Mit Breite ist die Dimension senkrecht zur Erstreckungsrichtung und parallel zur Längsmittelebene der beiden Deckplatten gemeint, d.h. eine Dimension in Längsrichtung der Leichtbauplatte. Mit Länge ist die zur Breite und Höhe senkrechte Dimension gemeint, die sich also in Erstreckungsrichtung von der hinteren zur vorderen Schmalseite der Leichtbauplatte erstreckt.

Gemäß noch einer weiteren Ausgestaltung der erfindungsgemäßen Befestigungsanordnung hat der Wandfixierungsabschnitt eine größere Breite als der Stützabschnitt, wobei in diesem Fall die mindestens eine Befestigungsmittelaufnahme insbesondere in einem Teil des Wandfixierungsabschnitts angeordnet ist, der, bezogen auf die Erstreckungsrichtung, seitlich des Stützabschnitts liegt.

Gemäß einer weiteren Ausgestaltung der erfindungsgemäßen Befestigungsanordnung sind die mindestens zwei Befestigungsmittelaufnahmen bzw. sind vorzugsweise alle Befestigungsmittelaufnahmen näher an der der oberen Deckplatte im montierten Zustand zugewandten Seite des Wandfixierungsabschnitts als an der der unteren Deckplatte im montierten Zustand zugewandten Unterseite des Wandfixierungsabschnitts angeordnet. Zusätzlich oder alternativ ist denkbar, dass der mindestens eine Führungszapfen bzw. vorzugsweise alle Führungszapfen näher an der der oberen Deckplatte im montierten Zustand zugewandten Seite des Wandfixierungsabschnitts als an der der unteren Deckplatte im montierten Zustand zugewandten Unterseite des Wandfixierungsabschnitts angeordnet ist/sind. Auf diese Weise ist auch bei relativ hohen von der Leichtbauplatte auf das Halteteil übertragenen Momenten eine stabile Anbringung der Leichtbauplatte bzw. des Wandboards an der Wand gewährleistet. Die Last auf die in der Wand verankerten Befestigungsmittel wird dabei außerdem minimiert.

Gemäß noch einer Ausgestaltung der erfindungsgemäßen Befestigungsanordnung erstreckt sich die Oberseite und/oder die Unterseite des Stützabschnitts in Erstreckungsrichtung und quer dazu zumindest abschnittsweise (im montierten Zustand) parallel zur oberen Deckplatte und unteren Deckplatte. Auf diese Weise wird die Fläche, mit der die jeweilige Deckplatte mit dem Stützabschnitt in Kontakt ist, maximiert, was einerseits die Stützfunktion des Stützabschnitts optimiert und andererseits auch den Halt des Halteteils innerhalb der Leichtbauplatte verbessert.

Um den Halt noch weiter zu verbessern und im montierten Zustand eine relative Schwenk- und/oder Querbewegung zwischen Halteteil und Leichtbauplatte zu verhindern, kann die Oberseite und/oder Unterseite des Stützabschnitts ferner Rippen aufweisen, die vorzugsweise in Erstreckungsrichtung verlaufen. Zusätzlich oder alternativ können auch Mittel zur Fixierung, beispielsweise Verschraubung, des Halteteils an/mit einer oder beiden Deckplatten vorgesehen sein, beispielsweise Aufnahmen für Bolzen, Schrauben, Nägeln oder dergleichen, die von außen senkrecht zur Erstreckungsrichtung und insbesondere senkrecht zur Längsmittelebene der Deckplatten in die Leichtbauplatte eingebracht werden. Eine solche Aufnahme kann die Form eines Langlochs haben, und zwar bevorzugt eines (im Querschnitt) horizontalen Langlochs, das eine horizontale Feinjustierung der Leichtbauplatte relativ zum jeweiligen Halteteil quer zur Aufschieberichtung erlaubt. Auf diese Weise lässt sich das Halteteil gegen unbeabsichtigtes Herausziehen sichern.

Gemäß wiederum einer weiteren Ausgestaltung der erfindungsgemäßen Befestigungsanordnung ist vorgesehen dass der Stützabschnitt und/oder der Wandfixierungsabschnitt innen zumindest abschnittsweise hohl ist. Dadurch wird das Gewicht des gesamten Halteteils und damit der Leichtbauplatte bzw. des Wandboards minimiert, wobei trotzdem eine optimale Stabilität erhalten bleibt.

Um eine möglichst feste Fixierung der Leichtbauplatte bzw. des Wandboards an der Wand zu erreichen, ist gemäß einer weiteren Ausgestaltung der erfindungsgemäßen Befestigungsanordnung im montierten Zustand sowohl der Stützabschnitt größtenteils, vorzugsweise vollständig, als auch der Wandfixierungsabschnitt größtenteils, vorzugsweise vollständig, zwischen den beiden Deckplatten angeordnet. Auf diese Weise liegt die Leichtbauplatte im montierten Zustand bündig an der Wand an, wodurch Momente optimal von der Leichtbauplatte auf die Wand übertragen werden.

Erfindungsgemäß sind mindestens zwei Halteteile der zuvor beschriebenen Art und in der zuvor beschriebenen Anordnung vorgesehen, um die Leichtbauplatte mit der Wand zu verbinden. Durch die Verwendung von mindestens zwei der beschriebenen Halteteile ist eine noch höhere Stabilität und eine noch bessere Aufnahme von Momenten gewährleistet. Gemäß noch einer Ausgestaltung der erfindungsgemäßen Befestigungsanordnung ist die Wand eine Holzwerkstoffplatte, insbesondere eine Span-, OSB- (oriented strand board-) oder Faserplatte, wobei die Holzwerkstoffplatte auch die Deckplatte einer weiteren Leichtbauplatte sein kann. In diesem Fall ist die Wand also Teil der erfindungsgemäßen Befestigungsanordnung, was bei den übrigen Ausgestaltungen nicht zwingend ist. Die Wand kann, wie zuvor beschrieben wurde, von einem Seitenteil (Haupt), einer Rückwand, einem Boden oder einem Deckel eines Möbels gebildet sein.

Die Aufgabe wird ferner gemäß einer zweiten Lehre der vorliegenden Erfindung bei einem Verfahren zur Herstellung einer Befestigungsanordnung mit den Merkmalen des Anspruchs 13 gelöst.

Im Unterschied zum Stand der Technik wird also das Halteteil erst mit der Leichtbauplatte verbunden, wenn das Halteteil an der Wand fixiert ist. Ein separater Stützbeschlag, wie er aus dem Stand der Technik bekannt ist, der in einem separaten Schritt an der Wand zu befestigen wäre, ist erfindungsgemäß nicht vorgesehen. Im Unterschied zum Stand der Technik kann die Befestigungsanordnung also durch lediglich zwei Schritte hergestellt werden, d.h. die Leichtbauplatte bzw. das Wandboard montiert werden, nämlich zuerst durch das Verbinden des Halteteils mit der Wand und dann durch das Verbinden der Leichtbauplatte mit dem Halteteil.

Gemäß einer Ausgestaltung des erfindungsgemäßen Verfahrens wird das mindestens eine Halteteil durch den Vorgang des Einführens in die jeweilige Aufnahme und/oder nach dem Vorgang des Einführens in die jeweilige Aufnahme fest (unbeweglich) mit der Leichtbauplatte verbunden. Die feste Verbindung wird insbesondere mittels einer Schraube erreicht, die Leichtbauplatte und Halteteil miteinander verbindet, beispielsweise durch eine Schraube, die durch die obere oder untere Deckplatte geführt und in dem Halteteil, beispielsweise in bereits zuvor erwähnter Befestigungsmittelaufnahme bzw. in bereits zuvor erwähntem Langloch, verankert bzw. festgezogen wird.

Zusätzlich zu oder anstelle der Verwendung einer Schraube kann auch eine Verklemmung und/oder Verrastung zwischen Halteteil und Leichtbauplatte vorgesehen sein; in diesem Fall wird das mindestens eine Halteteil durch den Vorgang des Einführens in die jeweilige Aufnahme also automatisch mit der Leichtbauplatte fest verbunden. Durch den Vorgang des Einführens kann die Verbindung beispielsweise dadurch hergestellt werden, dass zwischen dem Halteteil und den Deckplatten eine reibschlüssige Verbindung oder Rastverbindung erfolgt.

Nach dem Vorgang des Einführens kann aber wie gesagt zusätzlich oder alternativ eine Verbindung beispielsweise auch dadurch erfolgen, dass mindestens eine der Deckplatten von außen mit dem Halteteil verschraubt und/oder vernagelt wird. Dies ist im erfindungsgemäßen Fall bevorzugt, da dann eine Verbindung zwischen Halteteil und Leichtbauplatte unter Verzicht auf ein Klebemittel zwischen dem Halteteil und den Deckplatten erfolgen kann. Dies ist vorteilhaft, da die Verbindung zwischen Halteteil und Leichtbauplatte nicht wie im Stand der Technik bereits werkseitig (maschinell) erfolgt, sondern vom Endverbraucher erst am Anbringungsort von Hand durchgeführt werden soll.

Die Aufgabe wird ferner gemäß einer dritten Lehre der vorliegenden Erfindung gelöst durch ein Möbel mit mindestens einer Befestigungsanordnung der zuvor definierten Art.

Die Aufgabe wird schließlich gemäß einer vierten Lehre der vorliegenden Erfindung gelöst durch ein Möbel, hergestellt durch ein Verfahren der zuvor definierten Art.

Es gibt nun eine Vielzahl von Möglichkeiten, die erfindungsgemäße Befestigungsanordnung, das erfindungsgemäße Verfahren und das erfindungsgemäße Möbel auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine schematische Schnittansicht einer erfindungsgemäßen Befestigungsanordnung,
- Fig. 2a) und b): perspektivische Ansichten eines Halteteils der erfindungsgemäßen Befestigungsanordnung aus Figur 1,
- Fig. 3a) und b): Schnittansichten eines ersten Ausführungsbeispiels eines erfindungsgemäßen Möbels
- Fig. 4a) und b): Schnittansichten eines zweiten Ausführungsbeispiels eines erfindungsgemäßen Möbels,
- Fig. 5: eine schematiche Schnittansicht einer weiteren erfindungsgemäßen Befestigungsanordnung,
- Fig. 6: eine perspektivische Ansicht eines Halteteils der erfindungsgemäßen Befestigungsanordnung aus Fig. 5,
- Fig. 7a) und b): Schnittansichten eines dritten Ausführungsbeispiels eines erfindungsgemäßen Möbels und
- Fig. 8a) und b): Schnittansichten eines vierten Ausführungsbeispiels eines erfindungsgemäßen Möbels.

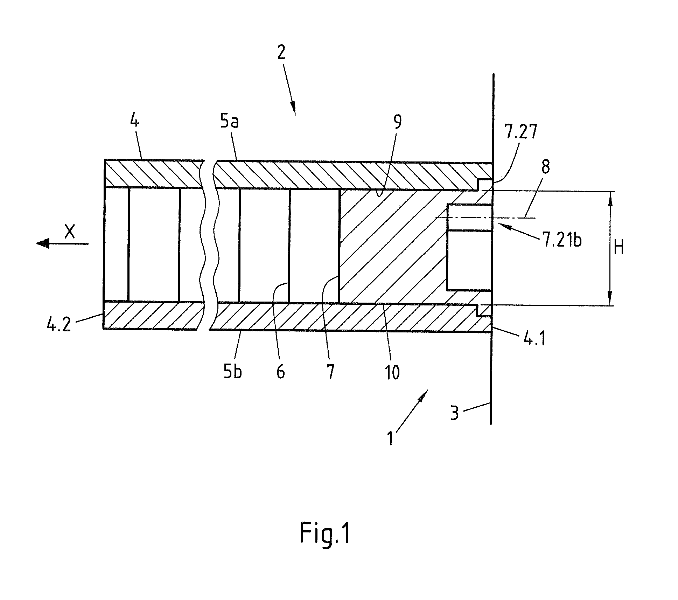

In Figur 1 ist eine Befestigungsanordnung 1 dargestellt, die zur Montage eines von einer Leichtbauplatte 4 gebildeten Wandboards 2 an einer Wand 3, hier einer Wand eines Gebäudes, dient.

Im Einzelnen ist in Figur 1 eine Befestigungsanordnung 1 gezeigt, mit einer sich von einer hinteren Schmalseite 4.1 zu einer vorderen Schmalseite 4.2 in einer Erstreckungsrichtung X erstreckenden Leichtbauplatte 4, die eine obere Deckplatte 5a, eine untere Deckplatte 5b und eine dazwischen angeordnete leichte Mittellage 6 aufweist, mit mindestens zwei Halteteilen 7, die einen Stützabschnitt 7.1 zum Tragen der Leichtbauplatte 4 aufweisen, der eine der oberen Deckplatte 5a im montierten Zustand zugewandte Oberseite 7.11 und eine der unteren Deckplatte 5b im montierten Zustand zugewandte Unterseite 7.12 aufweist, mit mindestens einem in der Wand 3 verankerbaren Befestigungsmittel 8 und mit mindestens einer Aufnahme 9 für das mindestens ein Halteteil 7, das sich in der Erstreckungsrichtung X ausgehend von der hinteren Schmalseite 4.1 zwischen den Deckplatten 5a und 5b ins Innere der Leichtbauplatte 4 erstreckt.

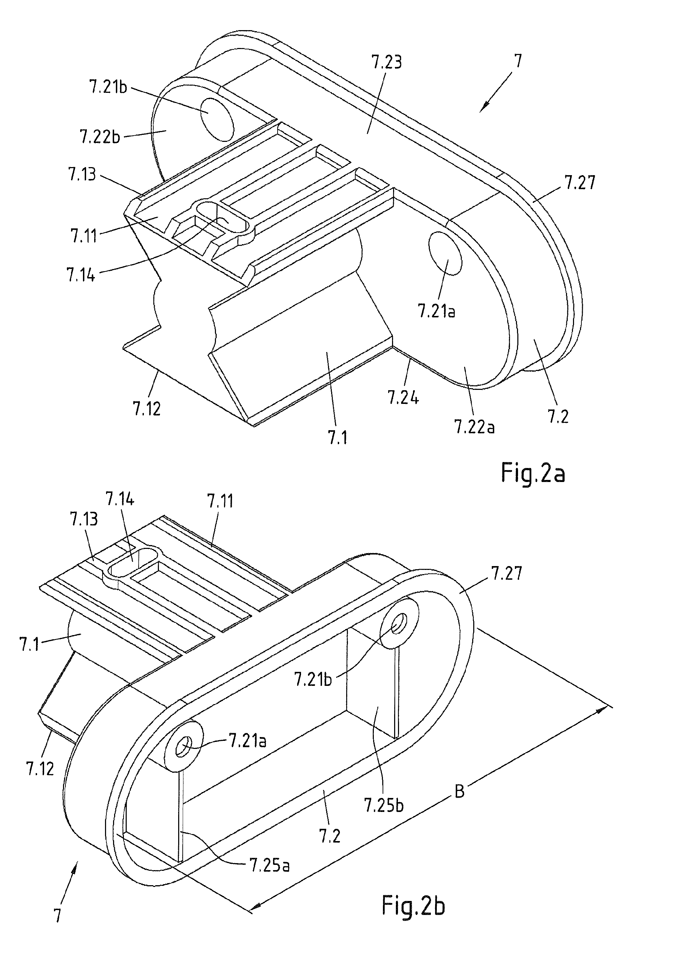

Wie in Figur 1 erkennbar ist, berührt im montierten Zustand der Stützabschnitt 7.1, der in den Figuren 2a) und b) dargestellt ist, im Inneren der Leichtbauplatte 4 sowohl die obere Deckplatte 5a als auch die untere Deckplatte 5b. Ferner weist das Halteteil 7 einen Wandfixierungsabschnitt 7.2 auf, der ebenfalls in den Figuren 2a) und b) dargestellt ist und, wie in Figur 1 erkennbar ist, auch im Inneren der Leichtbauplatte 4 sowohl mit der oberen Deckplatte 5a als auch der unteren Deckplatte 5b verbunden ist.

Der Stützabschnitt 7.1 ist mit dem Wandfixierungsabschnitt 7.2 einteilig ausgebildet, Stützabschnitt 7.1 und Wandfixierungsabschnitt 7.2 bilden also ein einstückiges Bauteil. Das einstückige Bauteil ist im vorliegenden Fall aus Kunststoff hergestellt.

Der Wandfixierungsabschnitt 7.2 weist zwei Befestigungsmittelaufnahmen 7.21a und 7.21b auf, durch die jeweils ein in der Wand 3 verankerbares Befestigungsmittel 8 (in Figur 1 als strichpunktierte Linie schematisch dargestellt), hier in Form einer Schraube, geführt werden kann. Dabei ist jede Befestigungsmittelaufnahme derart geformt, dass das Befestigungsmittel 8 nur ausgehend von der Seite der Befestigungsmittelaufnahme 7.21a bzw. 7.21b, die der Leichtbauplatte 4 im montierten Zustand zugewandt ist, in die Befestigungsmittelaufnahme 7.21a bzw. 7.21b einführbar und dann in der Wand 3 verankerbar ist. Vorliegend ist jede Befestigungsmittelaufnahme 7.21a bzw. 7.21b kanalförmig ausgebildet, d.h. vollständig von Material umgeben, und erstreckt sich in der genannten Erstreckungsrichtung X vollständig durch einen Teil 7.22a bzw. 7.22b des Wandfixierungsabschnitts 7.2.

Bei dem in den Figuren 1, 2a) und 2b) dargestellten Ausführungsbeispiel hat der Wandfixierungsabschnitt 7.2 dieselbe Höhe H wie der Stützabschnitt 7.1, hat aber eine größere Breite B als der Stützabschnitt 7.1, sodass rechts und links des Stützabschnitts 7.1 die besagten Teile 7.22a und 7.22b des Wandfixierungsabschnitts 7.2 gebildet werden.

Wie die Figuren 1, 2a) und 2b) ferner erkennen lassen, sind die Befestigungsmittelaufnahmen 7.21a und 7.21b näher an der Oberseite des Halteteils 7 und damit näher an der oberen Deckplatte 5a als an der Unterseite des Halteteils 7 und der unteren Deckplatte 5b angeordnet.

Die Oberseite 7.11 und die Unterseite 7.12 des Stützabschnitts 7.1 erstrecken sich über eine bestimmte Breite parallel zur oberen Deckplatte 5a und unteren Deckplatte 5b. Dabei sind Rippen 7.13 vorgesehen, die sich in der Erstreckungsrichtung X erstrecken und den Kontakt zwischen Halteteil 7 und jeweiliger Deckplatte 5a bzw. 5b herstellen. Ferner ist im Halteteil 7 oberseitig ein Mittel 7.14 im Stützabschnitt 7.1 vorgesehen, welches zur Aufnahme einer Schraube (nicht dargestellt) dient, welche zur zusätzlichen Fixierung des Halteteils 7 in der Leichtbauplatte 4 von außen eingesetzt werden kann. Das Mittel 7.14 ist hier ein Langloch, das nach dem vollständigen Aufschieben der Leichtbauplatte 4 auf das Halteteil 7 dem Anwender noch ermöglicht, die Leichtbauplatte 4 an der Wand 3 in horizontaler Richtung quer zur Aufschieberichtung noch feinzujustieren, bevor die Schraube oder dergleichen festgezogen wird. Eine Feinjustierung kann erforderlich sein, wenn zwei Halteteile 7 zur Montage dienen und der Anwender diese nicht im optimalen Abstand voneinander bereits an der Wand 3 befestigt hat. Die Verbindung zwischen Halteteil 7 und Leichtbauplatte 4 ist frei von Klebemittel.

Um Gewicht und Volumen einzusparen, ist der Wandfixierungsabschnitt 7.2 innen hohl ausgebildet. Stege 7.25a und 7.25b erstrecken sich aus Stabilitätsgründen von der Oberseite 7.23 zur Unterseite 7.24 des Wandfixierungsabschnitts 7.2 in dessen Inneren. Die Stege 7.25a und 7.25b stützen auch den Teil des Wandfixierungsabschnitts 7.2, in welchem der die Befestigungsmittelaufnahme 7.21a bzw. 7.21b bildende Kanal ausgebildet ist.

Wie Figur 1 zeigt, ist das gesamte Halteteil 7.1 einschließlich sowohl des Stützabschnitts 7.1 als auch des vollständigen Wandfixierungsabschnitts 7.2 innerhalb der Leichtbauplatte 4 zwischen den Deckplatten 5a und 5b angeordnet, sodass die Leichtbauplatte 4 mit ihrer hinteren Schmalseite 4.1 bündig an der Wand 3 anliegt.

Der Vollständigkeit halber sei erwähnt, dass in Figur 1 aufgrund der gewählten Schnittansicht nur ein Halteteil 7 dargestellt ist, zur Befestigung der Leichtbauplatte 4 an der Wand 3 jedoch bei diesem Ausführungsbeispiel zwei Halteteile 7 vorgesehen sind, die in gleicher Art und Weise ausgebildet und angeordnet sind. Dabei sind die beiden Halteteile 7 quer zur Erstreckungsrichtung X beabstandet voneinander angeordnet.

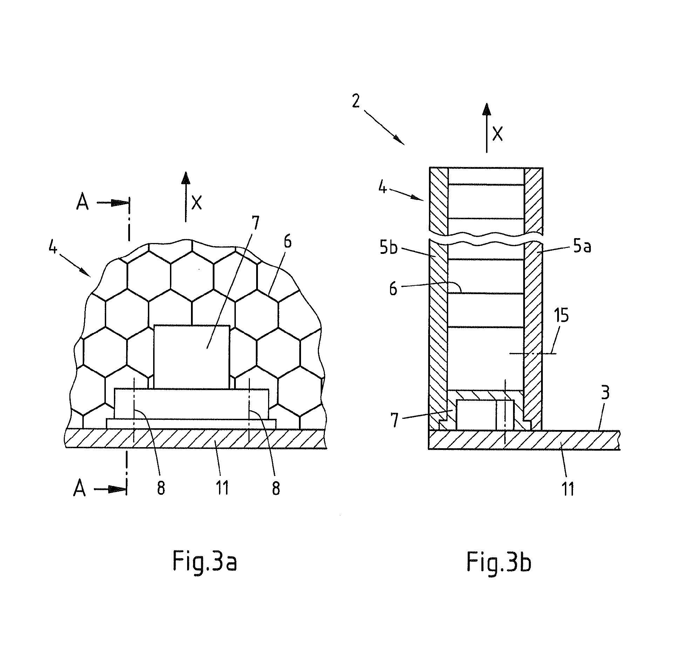

Figur 3a) zeigt eine Schnittansicht eines erfindungsgemäßen Möbels, wobei der Schnitt in Erstreckungsrichtung X und parallel zur Längsmittelebene einer Leichtbauplatte 4 geführt ist, die hier mit einem Möbel-Seitenteil 11, das hier zu Montagezwecken liegend angeordnet ist, mittels der vorangehend beschriebenen Befestigungsanordnung 1 verbunden worden ist. Das Seitenteil 11 bildet in diesem Fall die Wand 3, die der zuvor beschriebenen Gebäudewand 3 der vorangehenden Ausführungsbeispiele entspricht. Figur 3b) zeigt ebenfalls einen in Erstreckungsrichtung X verlaufenden Schnitt, der aber orthogonal zu dem Schnitt in Figur 3a) entlang der Linie AA verläuft.

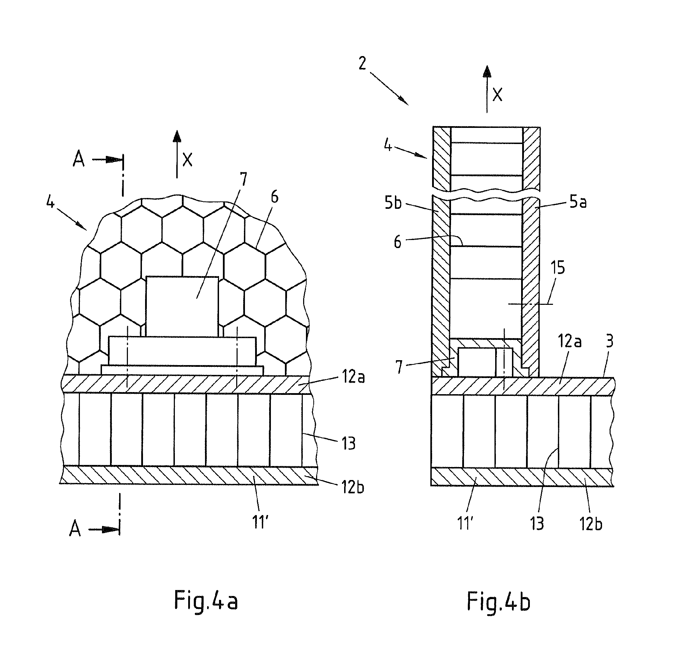

Die Figuren 4a) und b) zeigen ein weiteres Ausführungsbeispiel eines erfindungsgemäßen Möbels. Auch hier ist eine Leichtbauplatte 4 mit einer Wand 3 mittels der erfindungsgemäßen Befestigungsanordnung 1 verbunden. Wie die Schnittansichten in den Figuren 4a) und b), die den Schnittansichten in den Figuren 3a) und b) entsprechen, zeigen, wird in diesem Fall die Leichtbauplatte 4 mit einem Seitenteil 11' verbunden, welches selbst eine Leichtbauplatte mit einer oberen Deckplatte 12a, einer unteren Deckplatte 12b und einer dazwischen angeordneten leichten Mittellage 13 ist. Dabei bildet die obere Deckplatte 12a die Wand 3.

Die Montage bei den Ausführungsbeispielen in den Figuren 3a) und b) sowie 4a) und b) erfolgt wie bei den übrigen Ausführungsbeispielen in den Figuren 1 und 2, mit dem Unterschied, dass die Wand 3 keine Gebäudewand ist, sondern eine Holzwerkstoffplatte 11 bzw. 12a. Diese Holzwerkstoffplatte 11 bzw. 12a ist in beiden Fällen eine Spanplatte.

Bei den vorangehenden Ausführungsbeispielen weist der Wandfixierungsabschnitt 7.2 des Halteteils 7 einen umlaufenden Kragen 7.27 auf, der als Anschlag an der Leichtbauplatte 4 dient. Ein solcher Kragen ist aber nicht zwingend erforderlich, da das Halteteil 7 zunächst an der Wand 3 montiert wird und dann die Leichtbauplatte 4 auf das Halteteil 7 aufgeschoben wird, sodass auch die Wand als Anschlag dient.

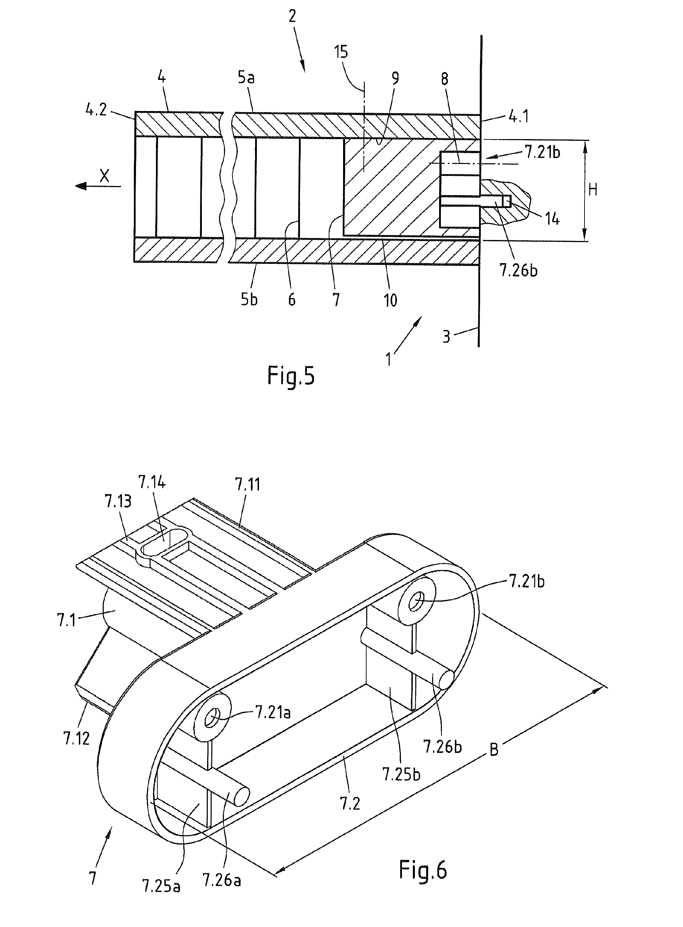

Fig. 5 zeigt für ein weiteres Ausführungsbeispiel eine Ansicht, welche der in Fig. 1 gewählten Ansicht entspricht. Bei dem in Fig. 5 gezeigten Ausführungsbeispiel ist das Halteteil 7 an seinem zur Wand 3 weisenden Ende im Unterschied zu dem Ausführungsbeispiel in Fig. 1 zusätzlich noch mit Führungszapfen versehen, von denen hier nur ein Führungszapfen 7.26b sichtbar ist. Der Führungszapfen 7.26b ist genau wie der nicht dargestellte Führungszapfen einstückig mit dem Halteteil 7, insbesondere mit dem Wandfixierungsabschnitt 7.2, ausgeführt.

Der über die hintere Schmalseite 4.1 der Leichtbauplatte hinausragende Teil des jeweiligen Führungszapfens 7.26b ist dabei in eine in der Wand 3 vorgebohrte Vertiefung 14 eingeführt.

Ein weiterer Unterschied zum Ausführungsbeispiel in Fig. 1 ist, dass der Wandfixierungsabschnitt 7.2 hier keinen umlaufenden Kragen aufweist und entsprechend auch an den Stirnkanten der Deckplatten 5a und 5b auf eine Aufnahme für einen solchen Kragen verzichtet worden ist.

Im in Fig. 5 dargestellten Fall ist das Halteteil 7 außerdem mit einem Spiel in die Aufnahme 9 der Leichtbauplatte 4 eingesetzt, so dass im montierten Zustand das Halteteil 7 nur die obere Deckplatte 5a innenseitig bzw. unterseitig berührt, mit der unteren Deckplatte 5b aber nicht oder zumindest nicht über die gesamte länge des Halteteils 7 in Kontakt kommt.

In Fig. 5 ist schließlich noch durch eine strichpunktierte Linie eine Schraube 15 dargestellt, die mit dem Langloch 7.14 im Halteteil 7 zusammenwirkt und verhindert, dass die Leichtbauplatte 4 im montierten Zustand unabsichtlich vom Halteteil 7 abgezogen werden kann. Durch Festziehen dieser Schraube 15 wird die Leichtbauplatte 4 auch fest mit dem Halteteil 7 und dadurch mit der Wand 3 verbunden und im vorbestimmten Winkel, insbesondere senkrecht, zur Wand 3 ausgerichtet. In letzterem Fall muss das Halteteil 7 also nicht beide Deckplatten, d.h. die obere und die untere Deckplatte 5a und 5b, berühren.

Im Übrigen ist das Halteteil 7 und auch die übrige Befestigungsanordnung 1 in derselben Weise ausgebildet, wie die in Fig. 1 gezeigte Befestigungsanordnung 1.

Fig. 6 zeigt in einer perspektivischen Ansicht, die der in Fig. 2b) gewählten Ansicht entspricht, das Halteteil 7, welches in Fig. 5 Bestandteil der Befestigungsanordnung 1 ist. Deutlich zu erkennen sind hier die beiden Führungszapfen 7.26a und 7.26b, welche gegenüber dem übrigen Wandfixierungsabschnitt 7.2 hervorspringen. Dabei sind in diesem Fall die Führungszapfen 7.26a und 7.26b jeweils vertikal unterhalb einer der Befestigungsmittelaufnahmen 7.21a und 7.21b angeordnet. Grundsätzlich ist es erfindungsgemäß aber auch denkbar, die Führungszapfen in horizontaler Richtung gegenüber den Befestigungsmittelaufnahmen zu versetzen. Es ist sogar denkbar, dass die Führungszapfen in derselben horizontalen Ebene wie die Befestigungsmittelaufnahmen liegen.

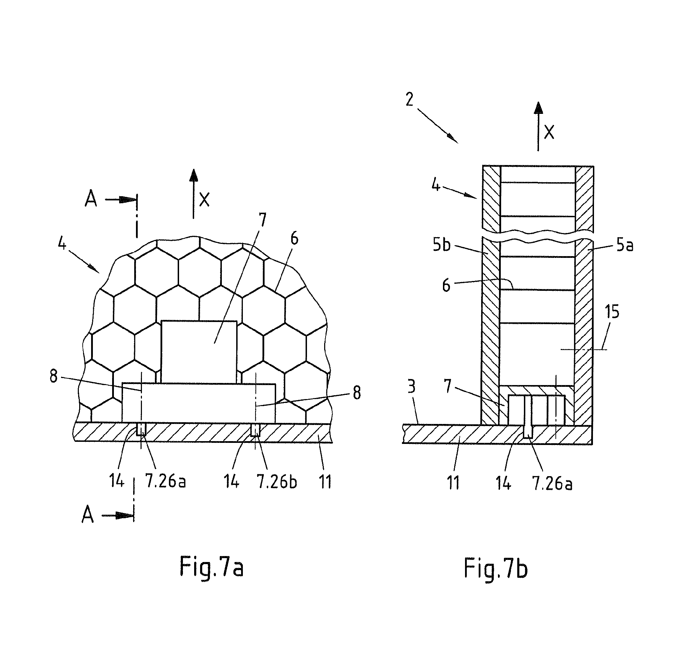

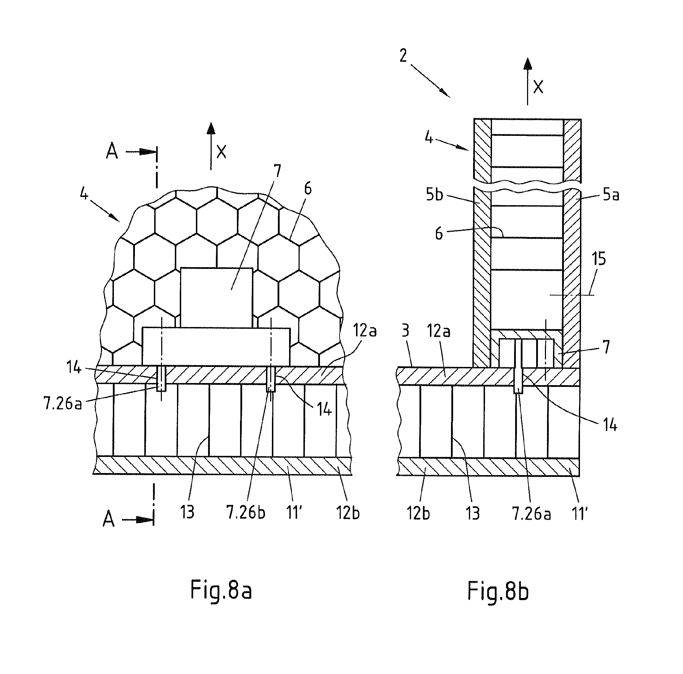

Schließlich zeigen die Figuren 7a) und b) noch ein drittes Ausführungsbeispiel eines erfindungsgemäßen Möbels und die Figuren 8a) und b) ein viertes Ausführungsbeispiel eines erfindungsgemäßen Möbels. Dabei entsprechen die Ansichten in diesen Figuren den Ansichten in den Figuren 3a) und b) bzw. 4a) und b).

Die jeweils in den Figuren 7a) und b) bzw. 8a) und b) dargestellte Befestigungsanordnung 1 unterscheidet sich von der in den Figuren 3a) und b) bzw. 4a) und b) gezeigten Befestigungsanordnung 1 jeweils dadurch, dass das Halteteil 7, wie zuvor auch anhand der Figuren 5 und 6 erläutert, zusätzlich über Führungszapfen 7.26a und 7.26b verfügt, die jeweils in eine Vertiefung 14 des Seitenteils 11 bzw. 11' eingesetzt sind.

Dabei ist die Länge der Führungszapfen 7.26a und 7.26b, insbesondere die Länge des hervorstehenden Teils der Führungszapfen, und die Tiefe der Vertiefung 14 so gewählt, dass der jeweilige Führungszapfen 7.26a und 7.26b im montierten Zustand der Befestigungsanordnung 1 nicht an der Außenseite des Seitenteils 11 bzw. 11' hervorsteht und insbesondere an dieser Außenseite nicht sichtbar ist.

Im Falle der Figuren 7a) und b) handelt es sich bei der Vertiefung 14 um eine Sacklochbohrung, die nicht vollständig durch das Seitenteil 11 hindurchführt. Im Falle der Figuren 8a) und b) handelt es sich bei der Vertiefung 14 um eine durchgehende Bohrung, die vollständig durch die obere Deckplatte 12a der Leichtbauplatte 4 hindurchführt. In letzterem Fall ragt der jeweilige Führungszapfen 7.26a bzw. 7.26b durch die obere Deckplatte 12a hindurch, nicht aber durch die untere Deckplatte 12b.

## Patentansprüche

1. Befestigungsanordnung (1) mit einer Leichtbauplatte (4), insbesondere eines Wandboards (2), zur Montage an einer Wand (3), wobei die Befestigungsanordnung (1) folgendes aufweist:
- eine sich von einer hinteren Schmalseite (4.1) zu einer vorderen Schmalseite (4.2) in einer Erstreckungsrichtung (X) erstreckende Leichtbauplatte (4), die eine obere Deckplatte (5a), eine von der oberen Deckplatte (5a) vertikal beabstandete untere Deckplatte (5b) und eine dazwischen angeordnete leichte Mittellage (6) aufweist,
- mindestens zwei Halteteile (7), die jeweils einen Stützabschnitt (7.1) zum Tragen der Leichtbauplatte (4) aufweisen, der eine der oberen Deckplatte (5a) im montierten Zustand zugewandte Oberseite (7.11) und eine der unteren Deckplatte (5b) im montierten Zustand zugewandte Unterseite (7.12) aufweist,
- mindestens ein in der Wand (3) verankerbares Befestigungsmittel (8) und
- mindestens eine Aufnahme (9) für das jeweilige Halteteil (7), die sich in der Erstreckungsrichtung (X) ausgehend von der hinteren Schmalseite (4.1) zwischen den Deckplatten (5a, 5b) ins Innere der Leichtbauplatte (4) erstreckt,
- wobei im montierten Zustand der Stützabschnitt (7.1) des jeweiligen Halteteils (7) in der Aufnahme (9) im Inneren der Leichtbauplatte (4) angeordnet ist und die obere Deckplatte (5a) berührt,
**dadurch gekennzeichnet,**
- **dass** die mindestens zwei Halteteile (7) ferner jeweils einen Wandfixierungsabschnitt (7.2) aufweisen, der einteilig mit dem Stützabschnitt (7.1) ausgebildet ist und mindestens zwei voneinander beabstandete Befestigungsmittelaufnahmen (7.21a,7.21b) für das in der Wand (3) verankerbare Befestigungsmittel (8) aufweist,
- **dass** zu beiden Seiten des Stützabschnitts (7.1) je ein Teil (7.22a,7.22b) des Wandfixierungsabschnitts (7.2) angeordnet ist, der, bezogen auf die Erstreckungsrichtung (X), seitlich des Stützabschnitts (7.1) liegt, und
- **dass** jeder dieser Teile (7.22a,7.22b) des Wandfixierungsabschnitts (7.2) mit mindestens einer Befestigungsmittelaufnahme (7.21a,7.21b) versehen ist.

2. Befestigungsanordnung (1) nach Anspruch 1, **dadurch gekennzeichnet, dass** die mindestens zwei Befestigungsmittelaufnahmen (7.21a,7.21b) im Wandfixierungsabschnitt (7.2) derart geformt sind, dass das in der Wand (3) verankerbare Befestigungsmittel (8) nur ausgehend von der Seite der Befestigungsmittelaufnahme (7.21a,7.21b), die der Leichtbauplatte (4) im montierten Zustand zugewandt ist, in die Befestigungsmittelaufnahme (7.21a,7.21b) einführbar und dann in der Wand (3) verankerbar ist, wobei insbesondere die mindestens zwei Befestigungsmittelaufnahmen (7.21a,7.21b) kanal- oder nutförmig ausgebildet sind und sich von der der Leichtbauplatte (4) im montierten Zustand zugewandten Seite des Wandfixierungsabschnitts (7.2) vollständig durch den Wandfixierungsabschnitt (7.2) bis zu der der Wand (3) im montierten Zustand zugewandten Seite des Wandfixierungsabschnitts (7.2) eerstrecken.

3. Befestigungsanordnung (1) nach einem der vorangehenden Ansprüche, **dadurch gekennzeichnet, dass** der Wandfixierungsabschnitt (7.2) mindestens einen Führungszapfen (7.26a,7.26b) aufweist, wobei sich der mindestens eine Führungszapfen (7.26a,7.26b), insbesondere entgegen der Erstreckungsrichtung (X), über die hintere Schmalseite (4.1) der Leichtbauplatte (4) hinaus erstreckt.

4. Befestigungsanordnung (1) nach Anspruch 3, **dadurch gekennzeichnet, dass** der Wandfixierungsabschnitt (7.2) mindestens zwei voneinander beabstandete Führungszapfen (7.26a,7.26b) aufweist, wobei vorzugsweise jeder der zu beiden Seiten des Stützabschnitts (7.1) angeordneten Teile (7.22a,7.22b) des Wandfixierungsabschnitts (7.2) mit mindestens einem Führungszapfen (7.26a,7.26b) versehen ist.

5. Befestigungsanordnung (1) nach einem der vorangehenden Ansprüche, **dadurch gekennzeichnet, dass** der Wandfixierungsabschnitt (7.2) dieselbe Höhe (H) wie der Stützabschnitt (7.1) und/oder eine größere Breite (B) als der Stützabschnitt (7.1) hat.

6. Befestigungsanordnung (1) nach einem der vorangehenden Ansprüche, **dadurch gekennzeichnet, dass** die mindestens zwei Befestigungsmittelaufnahmen (7.21a,7.21b) und/oder der mindestens eine Führungszapfen (7.26a,7.26b), vorzugsweise alle Befestigungsmittelaufnahmen (7.21a,7.21b) und/oder alle Führungszapfen (7.26a,7.26b), näher an der der oberen Deckplatte (5a) im montierten Zustand zugewandten Oberseite (7.23) des Wandfixierungsabschnitts (7.2) als an der der unteren Deckplatte (5b) im montierten Zustand zugewandten Unterseite (7.24) des Wandfixierungsabschnitts (7.2) angeordnet ist/sind.

7. Befestigungsanordnung (1) nach einem der vorangehenden Ansprüche, **dadurch gekennzeichnet, dass** sich die Oberseite (7.11) und/oder die Unterseite (7.12) des Stützabschnitts (7.1) in der Erstreckungsrichtung (X) und quer dazu zumindest abschnittsweise parallel zur oberen Deckplatte (5a) und unteren Deckplatte (5b) erstreckt.

8. Befestigungsanordnung (1) nach Anspruch 7, **dadurch gekennzeichnet, dass** die Oberseite (7.11) und/oder die Unterseite (7.12) des Stützabschnitts (7.1) Rippen (7.13), die vorzugsweise in der Erstreckungsrichtung (X) verlaufen, aufweist.

9. Befestigungsanordnung (1) nach einem der vorangehenden Ansprüche, **dadurch gekennzeichnet, dass** der Stützabschnitt (7.1) und/oder der Wandfixierungsabschnitt (7.2) innen zumindest abschnittsweise hohl ist.

10. Befestigungsanordnung (1) nach einem der vorangehenden Ansprüche, **dadurch gekennzeichnet, dass** im montierten Zustand der Stützabschnitt (7.1) größtenteils, vorzugsweise vollständig, und der Wandfixierungsabschnitt (7.2) größtenteils, vorzugsweise vollständig, zwischen den beiden Deckplatten (5a, 5b) angeordnet ist.

11. Befestigungsanordnung (1) nach einem der vorangehenden Ansprüche, **dadurch gekennzeichnet, dass** die Wand (3) eine Holzwerkstoffplatte, insbesondere eine Span-, OSB- oder Faserplatte ist.

12. Befestigungsanordnung (1) nach einem der vorangehenden Ansprüche, **dadurch gekennzeichnet, dass** die Wand (3) von einem Seitenteil, einer Rückwand, einem Boden oder einem Deckel eines Möbels gebildet wird.

13. Verfahren zur Herstellung einer Befestigungsanordnung (1) nach einem der vorangehenden Ansprüche,
**dadurch gekennzeichnet, dass** in einem ersten Verfahrensschritt die noch nicht mit der Leichtbauplatte (4) verbundenen mindestens zwei Halteteile (7) mit Hilfe des jeweiligen Befestigungsmittels (8) an der Wand (3) fixiert werden und danach in einem zweiten Verfahrensschritt die Leichtbauplatte (4) so auf die mindestens zwei Halteteile (7) aufgeschoben wird, dass die Halteteile (7) in die jeweilige Aufnahme (9) in der Leichtbauplatte (4) eingeführt werden.

14. Verfahren nach Anspruch 13, **dadurch gekennzeichnet, dass** das jeweilige Halteteil (7) durch den Vorgang des Einführens in die jeweilige Aufnahme (9) und/oder nach dem Vorgang des Einführens in die jeweilige Aufnahme (9), insbesondere mittels einer Schraube (15), fest mit der Leichtbauplatte (4) verbunden wird.

15. Möbel mit mindestens einer Befestigungsanordnung (1) nach einem der Ansprüche 1 bis 12 oder hergestellt durch ein Verfahren nach einem der Ansprüche 13 oder 14.

## Claims

1. A fastening arrangement (1) having a lightweight board (4), in particular a wall board (2), for mounting on a wall (3), the fastening arrangement (1) comprising the following:
- a lightweight board (4), which extends from a rear narrow side (4.1) to a front narrow side (4.2) in an extension direction (X) and has an upper covering board (5a), a lower covering board (5b) spaced apart vertically from the upper covering board (5a), and a light middle layer (6) arranged therebetween,
- at least two retaining parts (7), which each have a supporting section (7.1) for bearing the lightweight board (4), which supporting section has a top side (7.11), which faces the upper covering board (5a) when in the mounted state, and an underside (7.12), which faces the lower covering board (5b) when in the mounted state,
- at least one fastening means (8), which can be anchored in the wall (3), and
- at least one receptacle (9) for the respective retaining part (7), which extends in the extension direction (X) from the rear narrow side (4.1) between the covering boards (5a, 5b) into the interior of the lightweight board (4),
- the supporting section (7.1) of the respective retaining part (7) being arranged in the receptacle (9) in the interior of the lightweight board (4) and touching the upper covering board (5a) when in the mounted state, **characterised in that**
- the at least two retaining parts (7) furthermore each have a wall fixing section (7.2), which is formed integrally with the supporting section (7.1) and has at least two fastening means receptacles (7.21a, 7.21b), which are spaced apart from each other, for the fastening means (8) that can be anchored in the wall (3),
- one part (7.22a, 7.22b) of the wall fixing section (7.2) is arranged on either side of the supporting section (7.1), which lies laterally to the supporting section (7.1) in relation to the extension direction (X), and
- each of said parts (7.22a, 7.22b) of the wall fixing section (7.2) is provided with at least one fastening means receptacle (7.21a, 7.21b).

2. The fastening arrangement (1) according to claim 1, **characterised in that** the at least two fastening means receptacles (7.21a, 7.21b) are moulded in the wall fixing section (7.2) in such a manner that the fastening means (8) that can be anchored in the wall (3) can only be introduced into the fastening means receptacle (7.21a, 7.21b) and then anchored in the wall (3) from the side of the fastening means receptacle (7.21a, 7.21b) that faces the lightweight board (4) when in the mounted state, wherein in particular the at least two fastening means receptacles (7.21a, 7.21b) are channel- or groove-like and extend from the side of the wall fixing section (7.2) that faces the lightweight board (4) when in the mounted state, completely through the wall fixing section (7.2) to the side of the wall fixing section (7.2) that faces the wall (3) when in the mounted state.

3. The fastening arrangement (1) according to any one of the preceding claims, **characterised in that** the wall fixing section (7.2) has at least one guide pin (7.26a, 7.26b), wherein the at least one guide pin (7.26a, 7.26b) extends beyond the rear narrow side (4.1) of the lightweight board (4), in particular counter to the extension direction (X).

4. The fastening arrangement (1) according to claim 3, **characterised in that** the wall fixing section (7.2) has at least two guide pins (7.26a, 7.26b) that are spaced apart from each other, wherein preferably each of the parts (7.22a, 7.22b) of the wall fixing section (7.2) that are arranged on both sides of the supporting section (7.1) is provided with at least one guide pin (7.26a, 7.26b).

5. The fastening arrangement (1) according to any one of the preceding claims, **characterised in that** the wall fixing section (7.2) has the same height (H) as the supporting section (7.1) and/or a greater width (B) than the supporting section (7.1).

6. The fastening arrangement (1) according to any one of the preceding claims, **characterised in that** the at least two fastening means receptacles (7.21a, 7.21b) and/or the at least one guide pin (7.26a, 7.26b), preferably all the fastening means receptacles (7.21a, 7.21b) and/or all the guide pins (7.26a, 7.26b), is/are arranged closer to the top side (7.23) of the wall fixing section (7.2) that faces the upper covering board (5a) when in the mounted state than to the underside (7.24) of the wall fixing section (7.2) that faces the lower covering board (5b) when in the mounted state.

7. The fastening arrangement (1) according to any one of the preceding claims, **characterised in that** the top side (7.11) and/or the underside (7.12) of the supporting section (7.1) extend(s) in the extension direction (X) and transversely thereto parallel to the upper covering board (5a) and lower covering board (5b), at least in some sections.

8. The fastening arrangement (1) according to claim 7, **characterised in that** the top side (7.11) and/or the underside (7.12) of the supporting section (7.1) has ribs (7.13), which preferably run in the extension direction (X).

9. The fastening arrangement (1) according to any one of the preceding claims, **characterised in that** the supporting section (7.1) and/or the wall fixing section (7.2) is hollow at least in some sections on the inside.

10. The fastening arrangement (1) according to any one of the preceding claims, **characterised in that** the supporting section (7.1) is mostly, preferably completely, and the wall fixing section (7.2) is mostly, preferably completely, arranged between the two covering boards (5a, 5b) when in the mounted state.

11. The fastening arrangement (1),according to any one of the preceding claims, **characterised in that** the wall (3) is a wood-based material board, in particular a chipboard, OSB or fibreboard.

12. The fastening arrangement (1) according to any one of the preceding claims, **characterised in that** the wall (3) is formed by a side part, a rear wall, a base or a cover of an item of furniture.

13. A method for producing a fastening arrangement (1) according to any one of the preceding claims,
**characterised in that** in a first method step, the at least two retaining parts (7) that are not yet connected to the lightweight board (4) are fixed to the wall (3) with the aid of the respective fastening means (8), and then, in a second method step, the lightweight board (4) is placed onto the at least two retaining parts (7) in such a manner that the retaining parts (7) are introduced into the respective receptacle (9) in the lightweight board (4).

14. The method according to claim 13, **characterised in that** the respective retaining part (7) is connected fixedly to the lightweight board (4) by the process of introduction into the respective receptacle (9) and/or after the process of introduction into the respective receptacle (9), in particular by means of a screw (15).

15. An item of furniture having at least one fastening arrangement (1) according to any one of claims 1 to 12 or produced by a method according to either of claims 13 or 14.

## Revendications

1. Arrangement de fixation (1) avec un panneau alvéolaire (4), en particulier un panneau mural (2), destiné à être monté sur un mur (3), l'arrangement de fixation (1) comprenant:
- un panneau alvéolaire (4) s'étendant d'un côté étroit arrière (4.1) vers un côté étroit avant (4.2) dans une direction d'extension (X), lequel comprend un panneau de couverture supérieur (5a), un panneau de couverture inférieur (5b) espacé verticalement du panneau de couverture supérieur (5a), et une couche intermédiaire légère (6) agencée entre ceux-ci,
- au moins deux pièces de maintien (7) comprenant respectivement une section d'appui (7.1) destinée à supporter le panneau alvéolaire (4), laquelle présente une face supérieure (7.11) tournée vers le panneau de couverture supérieur (5a) dans l'état monté, et une face inférieure (7.12) tournée vers le panneau de couverture inférieur (5b) dans l'état monté,
- au moins un moyen de fixation (8) apte à être ancré dans le mur (3), et
- au moins une admission (9) pour la pièce de maintien (7) respective, laquelle s'étend à partir du côté étroit arrière (4.1) dans la direction d'extension (X), entre les panneaux de couverture (5a, 5b) jusqu'à l'intérieur du panneau alvéolaire (4),
- la section d'appui (7.1) de la pièce de maintien (7) respective étant agencée dans l'admission (9) à l'intérieur du panneau alvéolaire (4) et touchant le panneau de couverture supérieur (5a), dans l'état monté,
**caractérisé en ce que**
- les au moins deux pièces de maintien (7) comprennent en outre une section de fixation murale (7.2) respective, laquelle est conçue d'une seule pièce avec la section d'appui (7.1) et présente au moins deux admissions de moyen de fixation (7.21a, 7.21b) espacées l'une de l'autre, pour le moyen de fixation (8) apte à être ancré dans le mur (3),
- une partie (7.22a, 7.22b) de la section de fixation murale (7.2) située sur le côté de la section d'appui (7.1) par rapport à la direction d'extension (X) est agencée respectivement des deux côtés de la section d'appui (7.1), et
- chacune de ces parties (7.22a, 7.22b) de la section de fixation murale (7.2) est pourvue d'au moins une admission de moyen de fixation (7.21a, 7.21b).

2. Arrangement de fixation (1) selon la revendication 1, **caractérisé en ce que** les au moins deux admissions de moyen de fixation (7.21a, 7.21b) dans la section de fixation murale (7.2) sont formées de telle façon que le moyen de fixation (8) apte à être ancré dans le mur (3) ne peut être inséré dans l'admission de moyen de fixation (7.21a, 7.21b) et peut ensuite être ancré dans le mur (3) que par le côté de l'admission de moyen de fixation (7.21a, 7.21b), qui est tourné vers le panneau alvéolaire (4) dans l'état monté, sachant que en particulier les au moins deux admissions de moyen de fixation (7.21a, 7.21b) sont conçues en forme de canal ou de rainure et s'étendent complètement à travers la section de fixation murale (7.2), en partant du côté de la section de fixation murale (7.2) tourné vers le panneau alvéolaire (4) dans l'état monté, jusqu'au côté de la section de fixation murale (7.2) tourné vers le mur (3) dans l'état monté.

3. Arrangement de fixation (1) selon l'une des revendications précédentes, **caractérisé en ce que** la section de fixation murale (7.2) comprend au moins un tourillon de guidage (7.26a, 7.26b), l'au moins un tourillon de guidage (7.26a, 7.26b) s'étendant, en particulier contre la direction d'extension (X), au-delà du côté étroit arrière (4.1) du panneau alvéolaire (4).

4. Arrangement de fixation (1) selon la revendication 3, **caractérisé en ce que** la section de fixation murale (7.2) comprend au moins deux tourillons de guidage (7.26a, 7.26b) espacés l'un de l'autre, chacune des parties (7.22a, 7.22b) de la section de fixation murale (7.2) agencées des deux côtés de la section d'appui (7.1) étant de préférence pourvue d'au moins un tourillon de guidage (7.26a, 7.26b).

5. Arrangement de fixation (1) selon l'une des revendications précédentes, **caractérisé en ce que** la section de fixation murale (7.2) présente la même hauteur (H) que la section d'appui (7.1) et/ou une largeur (B) supérieure à celle de la section d'appui (7.1).

6. Arrangement de fixation (1) selon l'une des revendications précédentes, **caractérisé en ce que** les au moins deux admissions de moyen de fixation (7.21a, 7.21b) et/ou l'au moins un tourillon de guidage (7.26a, 7.26b), de préférence toutes les admissions de moyen de fixation (7.21a, 7.21b) et/ou tous les tourillons de guidage (7.26a, 7.26b), est/sont agencé(s) plus près de la face supérieure (7.23) de la section de fixation murale (7.2) tournée vers le panneau de couverture supérieur (5a) dans l'état monté que de la face inférieure (7.24) de la section de fixation murale (7.2) tournée vers le panneau de couverture inférieur (5b) dans l'état monté.

7. Arrangement de fixation (1) selon l'une des revendications précédentes, **caractérisé en ce que** la face supérieure (7.11) et/ou la face inférieure (7.12) de la section d'appui (7.1) s'étendent, au moins par tronçons, parallèlement au panneau de couverture supérieur (5a) et au panneau de couverture inférieur (5b) dans la direction d'extension (X) et transversalement à celle-ci.

8. Arrangement de fixation (1) selon la revendication 7, **caractérisé en ce que** la face supérieure (7.11) et/ou la face inférieure (7.12) de la section d'appui (7.1) comprend des nervures (7.13) s'étendant de préférence dans la direction d' extension (X).

9. Arrangement de fixation (1) selon l'une des revendications précédentes, **caractérisé en ce que** la section d'appui (7.1) et/ou la section de fixation murale (7.2) sont au moins partiellement creuses à l'intérieur.

10. Arrangement de fixation (1) selon l'une des revendications précédentes, **caractérisé en ce que** dans l'état monté, la section d'appui (7.1) est agencée principalement, de préférence complètement, et la section de fixation murale (7.2) est agencée principalement, de préférence complètement, entre les deux panneaux de couverture (5a, 5b).

11. Arrangement de fixation (1) selon l'une des revendications précédentes, **caractérisé en ce que** le mur (3) est un produit dérivé du bois en forme de plaque, en particulier un panneau de copeaux, OSB ou de fibres.

12. Arrangement de fixation (1) selon l'une des revendications précédentes, **caractérisé en ce que** le mur (3) est formé par une partie latérale, une paroi arrière, un fond ou un couvercle d'un meuble.

13. Procédé pour la fabrication d'un arrangement de fixation (1) selon l'une des revendications précédentes,
**caractérisé en ce qu'**au cours d'une première étape de procédé, les au moins deux pièces de maintien (7) pas encore reliées au panneau alvéolaire (4) sont fixées au mur (3) à l'aide du moyen de fixation (8) respectif, et **en ce qu'**au cours d'une deuxième étape de procédé, le panneau alvéolaire (4) est ensuite poussé sur les au moins deux pièces de maintien (7), de manière à insérer les pièces de maintien (7) dans l'admission (9) respective dans le panneau alvéolaire (4).

14. Procédé selon la revendication 13, **caractérisé en ce que** la pièce de maintien (7) respective est reliée fixement au panneau alvéolaire (4), par l'opération d'insertion dans l'admission (9) respective et/ou suite à l'opération d'insertion dans l'admission (9) respective, en particulier au moyen d'une vis (15).

15. Meuble avec au moins un arrangement de fixation (1) selon l'une des revendications 1 à 12, ou fabriqué à l'aide d'un procédé selon l'une des revendications 13 ou 14.
